# EUROPÄISCHE PATENTANMELDUNG

(11) **EP 1 902 804 A2**
(43) Veröffentlichungstag der Anmeldung: **26.03.2008**
(21) Anmeldenummer: 07405242.4
(22) Anmeldetag: 20.08.2007
(51) Int. Cl.: B23G 1/34

(54) **Gewindewirbelwerkzeug**

(30) Priorität: 19.09.2006 CH 14872006
(71) Anmelder: Utilis AG Präzisionswerkzeuge, 8555 Müllheim (CH)
(72) Erfinder: Macario, Mario, 9606 Bütschwil (CH)
(74) Vertreter: Schneider Feldmann AG Patent- und Markenanwälte

(57) **Zusammenfassung**

Beschrieben wird ein ringförmiger Gewindewirbelkopf (1), über dessen Innenumfang (11) ragend in Aussparungen in einer ersten Ebene gelagerte und direkt mit dem Gewindewirbelkopf (1) verbundene Wendeschneidplatten (3) befestigt sind. Die Mehrzahl an Wendeschneidplatten (3) liegt in der Art mit einer Wendeschneidplattenoberfläche auf einer Lagerfläche der Aussparung auf, dass die Wendeschneidplatten (3) einzeln zugänglich sind und mittels eines Befestigungselements einfach demontierbar und montierbar sind. Durch die Mehrzahl der verwendeten Wendeschneidplatten (3) wird der erzeugte Span pro Wendeschneidplatte (3) minimiert und die Standzeit bzw. die Leistungsfähigkeit des Gewindewirbelkopfes (1) erhöht. Desweiteren können Aussparungen auch in einer zweiten Ebene befindlich sein, sodass neben einer Mehrzahl an Wendeschneidplatten (3) in einer ersten Ebene zusätzlich eine Mehrzahl an Wendeschneidplatten (3) in einer zweiten Ebene, parallel zur ersten Ebene versetzt, angeordnet und befestigt werden können. Ein Gewindewirbelkopf (1) mit Wendeschneidplatten (3) in einer ersten und einer zweiten Ebene ermöglicht die Herstellung von mehrgängigen Aussengewinden in einem Arbeitsgang.

## Beschreibung

### Technisches Gebiet

Die vorliegende Erfindung beschreibt einen ringförmigen, auf einer Werkzeugspindel einer Drehmaschine befestigbaren und um eine Rotationsachse rotierbaren Gewindewirbelkopf, umfassend ein Durchgangsloch mit einem Innenumfang und eine Mehrzahl von radial in Richtung Rotationsachse weisenden Schneidplatten, umfassend mindestens eine Schneide mit mindestens einer Schneidkante, wobei die Schneidplatten radial über den Innenumfang in Richtung Rotationsachse ragend, so angeordnet sind, dass die mindestens eine Schneidkante spanabhebend an einem Werkstück, welches auf einer Werkstückspindel gelagert ist und linearbeweglich innerhalb des Durchgangslochs führbar ist und drehbeweglich entlang der Schneiden führbar ist, wodurch Aussengewinde verschiedener Formen aus dem vollen Material des Werkstücks gewindewirbelnd erzeugbar sind.

### Stand der Technik

In einigen technischen Gebieten wie beispielsweise in der Medizinaltechnik werden hohe Anforderungen an die Erzeugung von Aussengewinden durch eine zerspanende Bearbeitung von Werkstückoberflächen gestellt. Im Bereich der Implantate dürfen keine Schneidecken beim Gewindeschneiden entstehen und die resultierenden Gewinde müssen gratfrei sein und eine hohe Oberflächenqualität aufweisen, weshalb Gewinde für Implantate seit geraumer Zeit durch Gewindewirbeln hergestellt werden. Mit diesem Verfahren können Implantate, meist aus rostfreiem Edelstahl, Titan oder Titanlegierungen mit grösstmöglicher Präzision hergestellt werden.

Bei diesem Verfahren wird ein ortsfester Gewindewirbelkopf mit hohen Umdrehungsfrequenzen auf einer Werkzeugspindel einer Drehbank befestigt rotiert und ein, in eine meist gleichsinnig langsam drehende Werkstückspindel, eingespanntes Werkstück wird durch ein Durchgangsloch im Gewindewirbelkopf geführt. Bei diesem Verfahren wird das Werkstück an Schneidplatten, mit einer definierten Anzahi von Schneiden und Schneidkanten, welche in das Durchgangsloch des Gewindewirbelkopfes ragen, entlang geführt, wodurch durch das Fräsen der Schneidkanten ein Aussengewinde ins volle Material eingebracht wird und damit in einem Arbeitsgang hergestellt werden kann.

Je nach Wahl des Profils der Schneiden, der Ausrichtung des Gewindewirbelkopfes und damit der Schneidplatten relativ zum Werkstück und der Programmierung der Bewegung des Werkstücks relativ zum Gewindewirbelkopf sind verschiedene Gewindeformen herstellbar. Durch das Verfahren der Werkstückspindel relativ zum Gewindewirbelkopf sind auch Kegelgewinde herstellbar, wobei sich alle, durch Gewindewirbeln hergestellten Gewinde durch eine hohe facettenfreie Gewindeoberflächengüte auszeichnen.

In der EP 1 287 932 A1 wird ein aus mehreren Ringen aufgebauter Gewindewirbelkopf beschrieben, welcher mehrere langgestreckte Schneidplatten aufweist, welche zur Rotationsachse des Gewindewirbelkopfes über das Durchgangsloch einer Basis weisend angeordnet sind. Der Vorteil der langgestreckten Schneidplatten liegt darin, dass man diese bis zu zwanzig mal nachschleifen und dementsprechend wiederverwenden kann.

Die Schneidplatten liegen in einer Ebene auf der Basis des Gewindewirbelkopfes auf und sind in Schlitze in einem mittleren Ring, der ebenfalls auf der Basis liegt, eingeführt. Die Verspannung eines äusseren Ringes gegen die Basis presst die Schneidplatten fest auf die Oberfläche der Basis, so dass die Schneidplatten in Richtung der Rotationsachse auf der Basis fixiert sind. Durch den Einsatz mehrerer Schrauben, welche den äusseren Ring durchsetzen und in Sacklöcher in der Basis eingreifen, werden die eingesetzten Schneidplatten auf der Basis liegend und in Schlitzen des mittleren Ringes liegend fixiert.

Zur radialen Positionierung jeder einzelnen Schneidplatte wird ein Gewindestift eingesetzt, welcher in ein Innengewinde im mittleren Ring eingreift und durch den Kontakt mit der, der Schneidkante abgewandten Seite jeder Schneidplatte, die Einstellung des radialen Abstands jeder Schneidkante jeder einzelnen Schneidplatte ermöglicht.

Da die Schneidplatten nicht einzeln zugänglich und einzeln an der Basis fixiert sind, sondern mittels Verspannung des äusseren Ringes gegen die Basis gehalten werden, ist kein einfacher und schneller Austausch einzelner Schneidplatten möglich. Der Gewindewirbelkopf muss komplett demontiert werden, was einen hohen Arbeitsaufwand und eine grosse Umrüstzeit bedingt. Wenn einzelne oder alle Schneidplatten nachgeschliffen wurden, müssen die radialen Abstände der Schneidplatten zur Rotationsachse für jede einzelne Schneidplatte einzeln nachjustiert werden. Auch dieser Vorgang ist zeitintensiv.

### Darstellung der Erfindung

Die vorliegende Erfindung hat sich zur Aufgabe gestellt einen Gewindewirbelkopf so zu verbessern, dass die Standzeit des Gewindewirbelkopfes erhöht ist und das der Austausch einzelner Schneidplatten einfach und schnell, ohne zusätzliche Justierarbeiten durchführbar ist. Diese Aufgaben erfüllt eine Vorrichtung mit den Merkmalen des Patentanspruches 1.
In den abhängigen Ansprüchen sind weitere vorteilhafte Ausgestaltungsformen des erfindungsgemässen Gewindewirbelkopfes offenbart, welche die Effizient des Gewindewirbelns weiter erhöhen.

### Kurze Beschreibung der Zeichnungen

Die Erfindung wird nachstehend im Zusammenhang mit den Zeichnungen beschrieben.
Figur 1 zeigt eine perspektivische Ansicht des erfindungsgemässen Gewindewirbelkopfes mit Aussparungen in einer ersten Ebene
Figur 2 zeigt eine Aufsicht auf einen mit Wendeschneidplatten bestückten Gewindewirbelkopf
Figur 3 zeigt eine perspektivische Ansicht eines Gewindewirbelkopfes mit Aussparungen in einer ersten und einer zweiten Ebene.
Figur 4 zeigt eine, im Bereich des Gewindewirbelkopfes teilweise geschnittene, Draufsicht auf einen Gewindewirbelkopf und eine Werkstückspindel.

### Beschreibung

Ein erfindungsgemässer ringförmiger Gewindewirbelkopf 1 weist ein Durchgangsloch 10 und einen Innenumfang 11 auf. Der Gewindewirbelkopf 1 kann mit einem Drehfutter an einer Werkzeugspindel 12 einer Drehmaschine befestigt werden. Während des Gewindewirbelns wird der Gewindewirbelkopf 1 mit hohen Umdrehungsfrequenzen um eine Rotationsachse 5 rotiert, welche mit der Zylinderachse des Gewindewirbelkopfes 1 zusammenfällt.

Der Werkzeugspindel 12 gegenüberliegend befindet sich eine Werkstückspindel 61 auf welcher sich ein Werkstück 6 befindet, in welches ein Aussengewinde 60 gewindewirbelnd aus dem vollen Material gefräst wird. Die Werkstückspindel 61 rotiert um eine Längsachse 62 des Werkstücks 6 mit niedrigen Umlauffrequenzen und ist linear verfahrbar. Computergesteuerte Drehmaschinen erlauben die vollautomatische, softwaregesteuerte Bedienung des gesamten Gewindewirbelproszesses, sodass die gewünschten Aussengewinde 60 in einem Arbeitsgang, ohne Unterbrechnung und ohne weitere Eingriffe durchgeführt werden können.

Entlang des Umfangs des Gewindewirbelkopfes 1 verteilt, wird eine Mehrzahl von spiegelsymmetrischen Wendeschneidplatten 3 in einer ersten Ebene 7 in Aussparungen 2 mit fest vorgegebenen radialen Abständen von der Rotationsachse 5 angeordnet. Jede einzelne Wendeschneidplatte 3 wird mit einer Wendeschneidplattenfläche 32 auf einer Lagerfläche 20 der Aussparung 2 so angeordnet, dass eine Schneide 30 und mindestens eine Schneidkante 31 über den Innenumfang 11 des Gewindewirbelkopfes 1 in Richtung Rotationsachse 5 ragt.

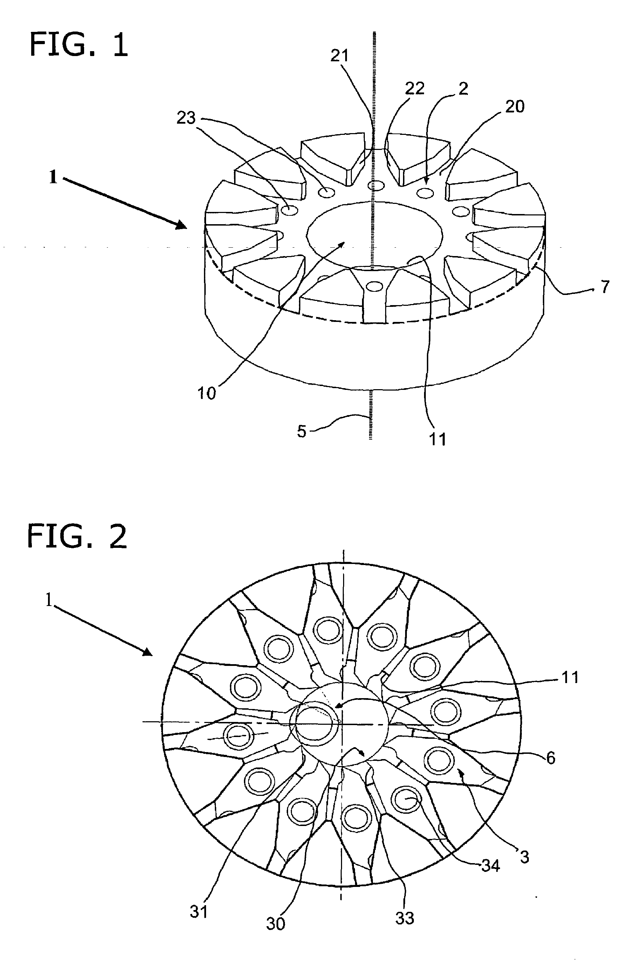

Wie in Figur 1 verdeutlicht, befindet sich jede einzelne Lagerfläche 20 jeder einzelnen Aussparung 2 in der ersten Ebene 7 senkrecht zur Rotationsachse 5. Jede Lagerfläche 20 wird von einer ersten Seitenwand 21 und einer zweiten Seitenwand 22 begrenzt, sodass die eingeführte Wendeschneidplatte 3 gegen eine laterale Verschiebung gesichert ist und die Orientierung des Einbaus der Wendeschneidplatten 3 durch die erste und die zweite Seitenwand 21, 22 fest vorgegeben ist. Die hier beispielhaft gezeigten Wendeschneidplatten 3 sind quaderförmig ausgestaltet und daran angepasst muss der Schnitt der Aussparungen 2 sein.

Zu verwendende Wendeschneidplatten 3 weisen mindestens zwei Schneiden 30 auf gegenüberliegenden Seiten der Wendeschneidplatte 3 auf, wobei jede Schneide 30 mindestens eine Schneidkante 31 umfasst. Es können auch Wendeschneidplatten 3 eingesetzt werden, welche mehr als eine Schneidkante 31 pro Schneide 30 umfassen. Um die Spanlänge während des Gewindewirbelns an den Wendeschneidplatten 3 zu verringern sind wie in Figur 2 gezeigt, Spanleitstufen 33 vorgesehen, welche den Span wegführen.

Fixiert werden die Wendeschneidplatten 3 durch Befestigungselemente, welche in einer möglichen Ausführungsform Schrauben sein können. Es ist ebenso möglich, dass das Befestigungselement die Wendeschneidplatten 3 in den Aussparungen 2 des Gewindewirbelkopfes 1 klemmend befestigt.

In der hier offenbarten Ausführungsform wird jeweils eine Schraube durch eine Gewindebohrung 23 in jeder einzelnen Lagerfläche 20, jeweils durch ein Durchgangsloch 34 jeweils im Zentrum einer Wendeschneidplatte 3 durchgeführt und senkrecht zur Lagerfläche 20 liegend eingeschraubt und versenkt. Dadurch wird jede einzelne Wendeschneidplatte 3 form- und kraftschlüssig mit jeweils einer Aussparung 2 verbunden und damit direkt und unmittelbar mit dem Gewindewirbelkopf 1 in einer ersten Ebene 7 senkrecht zur Rotationsachse 5 liegend verbunden.

Nach dem Einspannen eines Werkstückes 6 in die Werkstückspindel 61 wird das Werkstück 6 mit niedriger Umlauffrequenz um die eigene Längsachse 62 rotiert und durch linearen Vorschub in Richtung der Längsachse 62 in das Durchgangsloch 10 des Gewindewirbelkopfes 1 eingeführt und durch eine lineare Bewegung senkrecht zur Längsachse 62 mit den Schneidkanten 31 des Gewindewirbelkopfes 1 in Kontakt gebracht. Die Rotationsrichtung der Werkzeugspindel 12 und der Werkstückspindel 61 können beim Gewindewirbeln gleich oder entgegengesetzt gewählt werden. Der spanende Kontakt der einzelnen Schneidkanten 31 mit der Oberfläche des Werkstücks 6 und die programmierte Vorschubbewegung und die Bewegung senkrecht zur Rotationsachse des Gewindewirbelkopfes 1 erzeugt ein Aussengewinde 60 mit einstellbarem Nenndurchmesser 601, Kerndurchmesser 602 und Steigung 603, je nach gewünschtem Resultat.

Durch die Mehrzahl an Wendeschneidplatten 3 sind die einzelnen Wendeschneidplatten 3 nacheinander nur für kurze Zeit in spanendem Kontakt mit dem Werkstück 6, wodurch weniger Span pro Wendeschneidplatte 3 entsteht und die Belastung jeder einzelnen Wendeschneidplatte 3 verringert wird. Je nach Wahl des gewünschten Kerndurchmessers 602 sind mehr als eine Schneidkante 31, möglicherweise sogar drei Schneidkanten 31 gleichzeitig mit dem Werkstück 6 in Kontakt, wodurch die Laufruhe der Drehmaschine gesteigert werden kann. Durch den erfindungsgemässen Gewindewirbelkopf 1 können höhere Leistungen während des Gewindewirbelns erreicht werden, wodurch Aussengewinde 60 in einem Arbeitsgang in kürzeren Zeiträumen hergestellt werden können. Es sind durch die oben beschriebenen Verbesserungen höhere Standzeiten des Gewindewirbelkopfes 1 erreichbar.

Wenn einzelne Wendeschneidplatten 3 verschlissen sind, ist es konstruktionsbedingt im Vergleich zum Stand der Technik wesentlich einfacher die einzelnen Wendeschneidplatten 3 zu wechseln, da diese in den einzelnen Aussparungen 2 einfach zugänglich und einfach demontierbar gelagert sind, wodurch die Umrüstzeit minimiert wird. Die Wendeschneidplatten 3 können einfach von der Lagerfläche 20 zwischen der ersten Seitenwand 21 und der zweiten Seitenwand 22 entfernt werden, nachdem das jeweilige Befestigungselement entfernt wurde. Nach dem Wenden und dem Wiedereinbau der Wendeschneidplatte 3 ist auf Grund der Lagerung in den beschriebenen Aussparungen 2 keine Orientierung und Ausrichtung der Wendeschneidplatten 3 nötig.

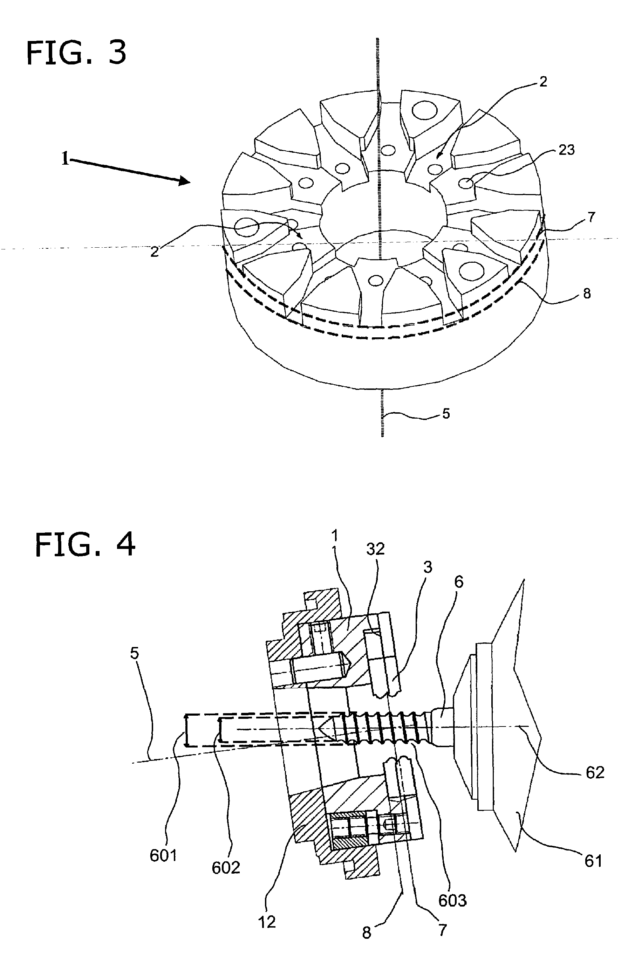

Aufgrund der Konstruktion ist die vorliegende Erfindung dahingehend erweiterbar, dass eine Mehrzahl von Wendeschneidplatten 3 zusätzlich in einer zweiten Ebene 8 senkrecht zur Rotationsachse 5 und parallel versetzt zur ersten Ebene 7 gelegen ist. Ein Gewindewirbelkopf 1, der Aussparungen 2 in einer ersten Ebene 7 und einer zweiten Ebene 8 umfasst, ist in Figur 3 offenbart. Die Orientierung und die direkte Fixierung der Wendeschneidplatten 3 auf dem Gewindewirbelkopf 1 wird wie bereits erläutert durchgeführt und sorgt auch in diesem Fall für eine einfache und schnelle Demontage und Montage der Wendeschneidplatten 3. Durch die Verwendung von Wendeschneidplatten 3 in einer ersten und einer zur ersten versetzten zweiten Ebene 7, 8 ist es möglich auch mehrgängige Aussengewinde 60 in einem Arbeitsgang mittels Gewindewirbelkopf 1 zu erzeugen. Die Steuerung der Drehmaschine ist der Anwendung entsprechend zu programmieren, sodass der Vorschub der Werkstückspindel 61 dem mehrgängigen Aussengewinde 60 bzw. der zu erreichenden Steigung 603 angepasst ist.

### Bezugszeichenliste

- 1: Gewindewirbelkopf
10 Durchgangsloch (zentrisch)
11 Innenumfang
12 Werkzeugspindel
- 2: Aussparung
20 Lagerfläche
21 erste Seitenwand
22 zweite Seitenwand
23 Gewindebohrung
- 3: Wendeschneidplatte
30 Schneide
31 Schneidkante
32 Wendeschneidplattenfläche
33 Spanleitstufe
34 Durchgangsloch
- 5: Rotationsachse (des Gewindewirbelkopfes)
- 6: Werkstück
60 Aussengewinde
601 Nenndurchmesser
602 Kerndurchmesser
603 Steigung
61 Werkstückspindel
62 Längsachse
- 7: Erste Ebene
- 8: Zweite Ebene

## Patentansprüche

1. Ringförmiger, auf einer Werkzeugspindel einer Drehmaschine befestigbarer und um eine Rotationsachse (5) rotierbarer Gewindewirbelkopf (1), umfassend
ein Durchgangsloch (10) mit einem Innenumfang (11) und eine Mehrzahl von radial in Richtung Rotationsachse (5) weisenden Schneidplatten, umfassend mindestens eine Schneide (30) mit mindestens einer Schneidkante (31), wobei die
Schneidplatten radial über den Innenumfang (11) in Richtung Rotationsachse (5) ragend, so angeordnet sind, dass die mindestens eine Schneidkante (31)
spanabhebend an einem Werkstück (6),
welches auf einer Werkstückspindel (61) gelagert ist und linearbeweglich innerhalb des Durchgangslochs (10) führbar ist und drehbeweglich entlang der Schneiden (30) führbar ist, wodurch Aussengewinde (60) verschiedener Formen aus dem vollen Material des Werkstücks (6) gewindewirbelnd erzeugbar sind,
**dadurch gekennzeichnet, dass**
eine Mehrzahl spiegelsymmetrischer Wendeschneidplatten (3) verwendet wird, wobei jede einzelne Wendeschneidplatte (3) direkt und unmittelbar form- und kraftschlüssig mit dem Gewindewirbelkopf (1) einzeln verbindbar ist, wobei jede Wendeschneidplatte (3) mit einer Wendeschneidplattenfläche (32) auf einer Lagerfläche (20) einer einzelnen frei zugänglichen Aussparung (2), in einer ersten Ebene (7) des Gewindewirbelkopfes (1) senkrecht zur Rotationsachse (5) radial orientiert zwischen einer ersten Seitenwand (21) und einer zweiten Seitenwand (22) der Aussparung (2) lagerbar ist und mittels je einem Befestigungselement fixierbar ist, wobei der Abstand der Wendeschneidplatten (3) entlang des Umfangs des Gewindewirbelkopfes (1) so gewählt ist, dass gleichzeitig immer mehr als eine Schneidkante (31) mit dem Werkstück (6) in Kontakt ist.

2. Gewindewirbelkopf nach Anspruch 1, **dadurch gekennzeichnet, dass** die Wendeschneidplatten (3) rautenförmig sind.

3. Gewindewirbelkopf nach Anspruch 1, **dadurch gekennzeichnet, dass** die Wendeschneidplatten (3) im Bereich der Schneidkante (31) Spanleitstufen (33) aufweisen, welche das Abbrechen und das Wegführen der Späne erleichtern.

4. Gewindewirbelkopf nach Anspruch 1, **dadurch gekennzeichnet, dass** das Befestigungselement eine Schraube ist, welche senkrecht, die Wendeschneidplatte (3) durch ein Durchgangsloch (34) querend in eine Gewindebohrung (23) in der Aussparung (2) einschraubbar ist.

5. Gewindewirbelkopf nach Anspruch 1, **dadurch gekennzeichnet, dass** eine Mehrzahl von spiegelsymmetrischen Wendeschneidplatten (3) direkt und unmittelbar form- und kraftschlüssig mit dem Gewindewirbelkopf (1) einzeln in einer zweiten Ebene (8), welche senkrecht zur Rotationsachse (5) und parallel zur ersten Ebene (7) angeordnet ist, in Aussparungen (2) lagerbar ist.

6. Gewindewirbelkopf nach Anspruch 5, **dadurch gekennzeichnet, dass** jede einzelne Wendeschneidplatte (3) mit einer Wendeschneidplattenfläche (32) auf einer Lagerfläche (20) einer einzelnen frei zugänglichen Aussparung (2) lagerbar ist und mittels je einem Befestigungselement fixierbar ist.
